Europäisches Patentamt

European Patent Office    (11) Publication number: **0 173 891**

Office européen des brevets    **A1**

(19)

(12)    # EUROPEAN PATENT APPLICATION

(21) Application number: 85110129.5    (51) Int. Cl.⁴: **F 16 G 11/00**

(22) Date of filing: 13.08.85

(30) Priority: 16.08.84 JP 124936/84

(43) Date of publication of application:
12.03.86 Bulletin 86/11

(84) Designated Contracting States:
BE CH DE FR IT LI NL SE

(71) Applicant: NIPPON NOTION KOGYO CO., LTD.
13, 2-chome, Kanda-Sakuma-cho Chiyoda-ku
Tokyo(JP)

(72) Inventor: Kasai, Kazumi
3105-1, Kamikoizumi
Namerikawa-shi Toyama-ken(JP)

(74) Representative: Casalonga, Axel et al,
BUREAU D.A. CASALONGA OFFICE JOSSE & PETIT
Baaderstrasse 12-14
D-8000 München 5(DE)

(54) Cord fastener.

(57) A cord fastener for adjustably fastening a cord (C) includes an integral male member (A1) comprising a grip (11) having at least a pair of spaced grip members, a pair of arms (12) extending obliquely upwardly from the grip members, respectively, and having upper surfaces (22), and a pair of pressers (13,13) joined to the arms, respectively, and disposed outwardly of the arms, respectively. The male member has at least one cord insertion hole (14) extending through the base and the grip and at least one expanding slot (18) extending across the cord insertion hole. The spaced grip members are divided from each other by the cord insertion hole and the slot, and have gripping ridges (20) extending into the cord insertion hole for biting engagement with the cord inserted through the cord insertion hole. The cord fastener also has a female member (B1) composed of a hollow body (30) having at least one through-hole for reception therein of the grip members and the arms, and lower surfaces engageable with the upper surfaces of the arms when the male member is inserted in the female member. The hollow body has inner surfaces (38) for engaging lower ends of the arms to force the gripping projections into biting engagement with the cord in the cord insertion hole.

**FIG.8**

EP 0 173 891 A1

- 1 -

## CORD FASTENER

The present invention relates to a cord fastener for adjustably fastening or stopping a fastening cord or string attached to a helmet, a hat, a sack, a garment, or other various articles, and more particularly to such a cord fastener composed of male and female members.

Various cord or string fasteners are known in the art which are attached to cords or strings on helmets, hats, bags, garments, or other objects for adjustably fastening or stopping the cords. One prior cord fastener is shown in Japanese Utility Model Laid-Open Publication No. 49-23670 published on February 28, 1974. The disclosed cord fastener is composed of an outer tube having an axial blind hole opening upwardly and a diametrical hole defined near its upper end, and an insert movably fitted in the blind hole in the outer tube and having a transverse through-hole. The ends of a cord which are inserted through the diametrical hole and the transverse through-hole are gripped between the outer tube and the insert which is resiliently urged upwardly by a compression coil spring disposed on the bottom of the blind hole in the outer tube. Japanese Utility Model Publication No. 51-38406 published on September 20, 1976 discloses a cord fastener comprising an outer tube having a downwardly tapered inner surface and an inner tube having an expanding slot extending from the lower end and terminating short of the upper end. In use, the inner tube is inserted into the outer tube, and the ends of a cord are threaded through the inner tube. When the cord is pulled downwardly, it frictionally moves the inner tube downwardly which is then elastically deformed inwardly by the tapered inner surface of the outer tube. The cord ends are now gripped firmly by the lower end of the inner tube.

The former cord fastener is disadvantageous in that the cord ends cannot be threaded through the holes unless they are held in registry with each other, and when the cord ends are removed, the outer tube, the insert, and the spring are disassembled and tend to get lost. A problem with the latter cord fastener is that since the outer and inner tubes are simply held together by mutual frictional engagement, the inner tube is likely to be detached from the outer tube, and they, as separated, also tend to get lost.

The present invention seeks to provide a cord fastener which allows a cord or cords to be inserted easily therethrough and is composed of male and female members that are retained firmly together against disengagement from each other.

According to the present invention, there is provided a cord fastener comprising a male member composed of a base, a grip extending integrally and downwardly from said base and having at least a pair of spaced grip members, at least one cord insertion hole extending through said base and said grip and at lease one first slot extending longitudinally across said cord insertion hole; a female member composed of a hollow body having at least one through-hole.

Said male member comprises a pair of arms extending obliquely upwardly from said grip members, respectively, and disposed outwardly of said grip members in spaced relation thereto, said arms having upper surfaces, and a pair of pressers extending outwardly of said arms, respectively, said grip members having gripping projections extending into said cord insertion hole; Said hollow body has a pair of diametrically opposite second slots opening upwardly and each having its upper open ends narrowed by a pair of overhanging locking teeth projecting toward each other, said locking teeth having lower surfaces engageable with said upper surface of said arms, said hollow body further having inner surfaces for engaging lower ends of said arms to force said gripping projections into biting engagement with the cord in said cord insertion hole.

Many other advantages and features of the present invention will become manifest to those versed in the art upon making reference to the detailed description and the accompanying sheets of drawings in which preferred structural embodiments incorporating the principles of the present invention are shown by way of illustrative example.

Figure 1 is a front elevational view of a male member of a cord fastener according to a first embodiment of the present invention;

Figure 2 is a cross-sectional view taken along line II - II of Figure 1;

Figure 3 is a bottom view of the male member shown in Figure 1;

Figure 4 is a cross-sectional view taken along line IV - IV of Figure 3;

Figure 5 is a plan view of a female member of the cord fastener of the first embodiment;

Figure 6 is a cross-sectional view taken along line VI - VI of Figure 5;

Figure 7 is a cross-sectional view taken along line VII - VII of Figure 5;

Figure 8 is a longitudinal cross-sectional view of the cord fastener of the first embodiment, with the male and female members coupled together;

Figure 9 is a bottom view of a male member of a cord fastener according to a second embodiment of the present invention;

Figure 10 is a plan view of a female member of the cord fastener of the second embodiment;

Figure 11 is a bottom view of the male and female members of Figures 9 and 11 which are mated together;

Figure 12 is a cross-sectional view taken along line XII - XII of Figure 11;

Figure 13 is a cross-sectional view taken along line XIII - XIII of Figure 11;

Figure 14 is a front elevational view of a male member of a cord fastener according to a third embodiment of the present invention;

Figure 15 is a side elevational view of the male member illustrated in Figure 14;

Figure 16 is a bottom view of the male member illustrated in Figure 14;

Figure 17 is a cross-sectional view taken along line XVII - XVII of Figure 16;

Figure 18 is a plan view of a female member of the cord fastener according to the third embodiment;

Figure 19 is a side elevational view of the female member of Figure 18;

Figure 20 is a cross-sectional view taken along line XX - XX of Figure 18; and

Figure 21 is a longitudinal cross-sectional view of the cord fastener of the third embodiment, with the male and female members coupled together.

Identical parts are denoted by identical reference characters throughout several views.

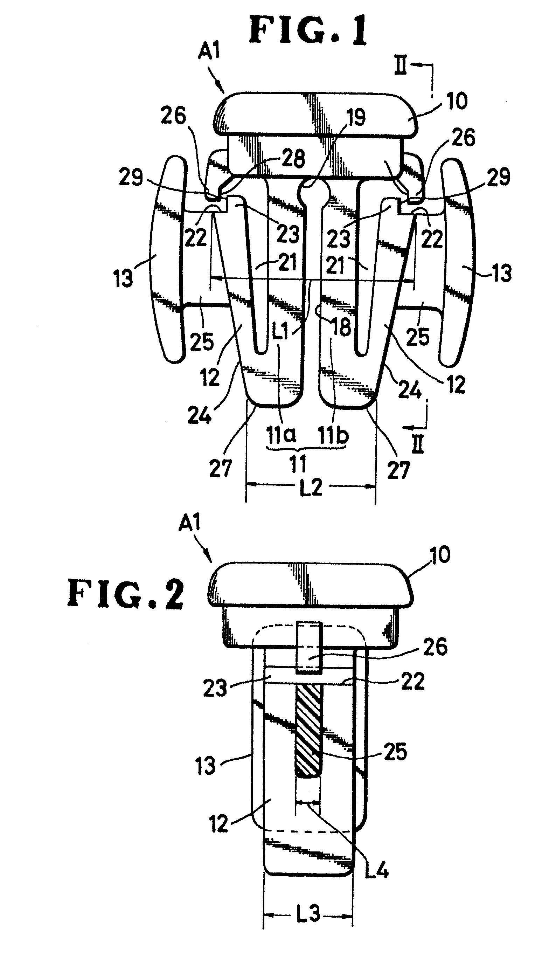

Figures 1 through 8 illustrate a cord fastener according to a first embodiment, the cord fastener being composed of a male member A1 and a female member B1, both molded of synthetic resin.

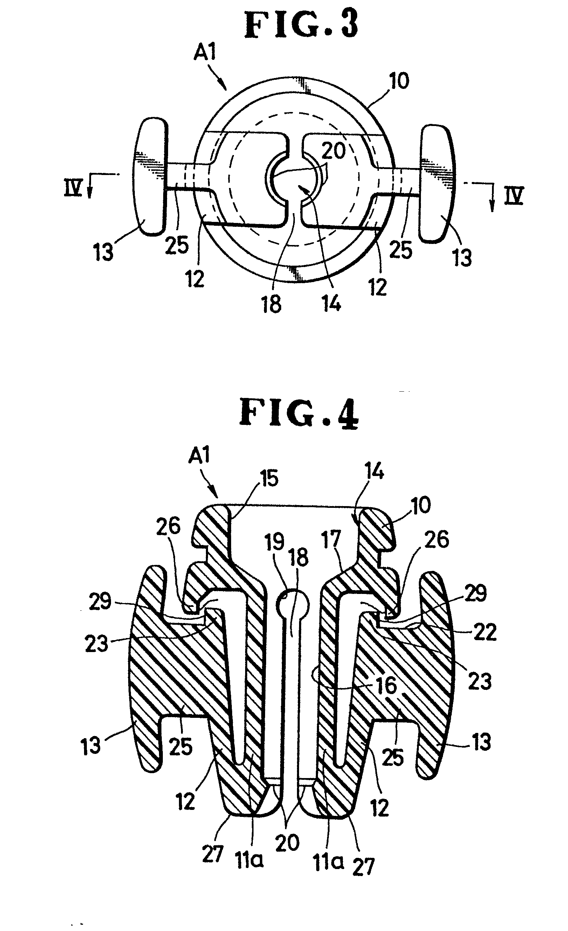

As shown in Figures 1 through 4, the male member A1 generally comprises a circular base 10, a grip 11 extending downwardly from the lower central portion of the base 10, and a pair of arms 12, 12 disposed on opposite sides of the grip 11 and extending upwardly from the lower end of the grip 11. A pair of pressers 13, 13 is integrally joined to the arms 12, 12, respectively, and disposed outwardly thereof. As shown in Figures 3 and 4, a cord insertion hole 14 is defined in and extends longitudinally through the base 10 and the grip 11. The cord insertion hole 14 includes a larger-diameter portion 15 defined in the base 10, a smaller-diameter portion 16 defined in the grip 11, and a downwardly tapered intermediate portion 17 between the larger- and smaller-diameter portions 15, 16.

The grip 11 is composed of a pair of elastically deformable grip members 11a, 11b divided by the cord insertion hole 14 and an expanding slot 18 defined centrally in the grip 11 and extending upwardly from its lower end and terminating in a larger circular recess 19 adjacent to the base 10. The expanding slot 18 communicates with the cord insertion hole 14. The recess 19 is effective in allowing the grip members 11a, 11b to be more elastically deformed near the base 10. The grip 11 also has a pair of confronting arcuate gripping ridges 20 of a triangular cross section projecting inwardly from lower side walls of the smaller-diameter portion 16 of the cord insertion hole 14.

The arms 12, 12 extend obliquely upwardly and progressively away from the grip 11 to define spaces 21 between the arms 12 and the grip 11. Each of the arms 12, 12 has a flat upper end surface 22 on which there is disposed a locking powl 23 projecting from an inner side portion of the upper end surface 22 toward the base 10. Each arm 12 has a slanted outer surface 24 inclined progressively outwardly in the upward direction.

The pressers 13, 13 are integrally coupled to the slanted outer surfaces 24, 24, respectively, through thin connectors 25, 25. The connectors 25, 25 are thinner than the arms 12, 12 and have upper surfaces lying flush with the upper end surfaces 22, 22, respectively, of the arms 12, 12. When the pressers 13, 13 are pressed by fingers toward the grip 11, the arms 12, 12 are forced to be elastically deformed inwardly toward the grip 11.

The base 10 has a pair of diametrically opposite locking projections 26, 26 disposed radially outwardly of the locking pawls 23, 23, respectively, and extending downwardly beyond the upper ends of the locking pawls 23, 23. The locking projections 26, 26 are of substantially the same width as that of the connectors 25, 25. The locking projections 26, 26 have inner surfaces 28, 28 confronting outer surfaces 29, 29 of the locking pawls 23, 23, respectively. When the pressers 13, 13 are pulled apart, the arms 12, 12 are elastically deformed outwardly about their lower ends, but will be prevented from undue deformation and hence breakage since the outer surfaces 29, 29 of the locking pawls 23, 23 engage the inner surfaces 28, 28 of the locking projections 26, 26, respectively. As illustrated in Figure 3, the grip 11 and the arms 12, 12 are of substantially the same width. The lower ends of the arms 12, 12 have arcuate outer surfaces 27 as shown in Figures 1 and 4.

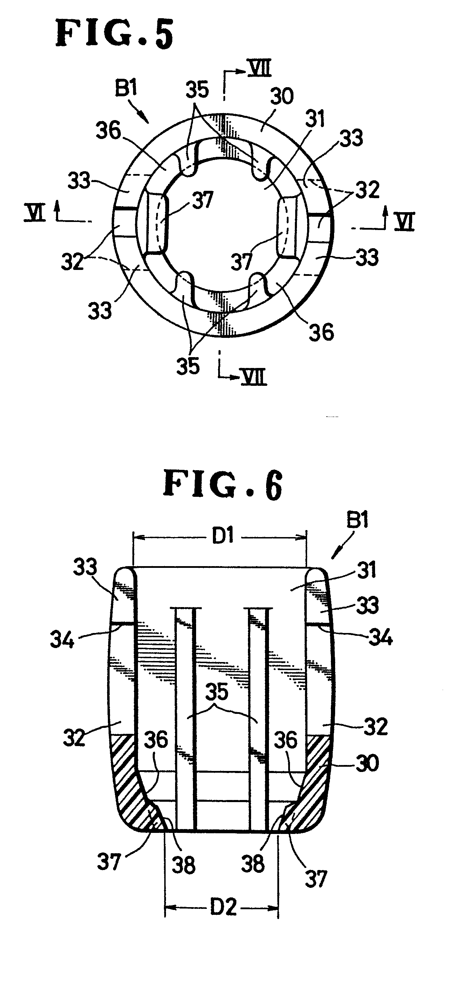

As illustrated in Figures 5 through 7, the female member B1 is essentially composed of a hollow tubular body 30 having an axial through-hole 31 for insertion therein of the grip 11 and the arms 12, 12 of the male member A1. The tubular body 30 has a pair of diametrically opposite slots 32, 32 opening upwardly and each having its upper open ends narrowed by a pair of overhanging locking teeth 33, 33 projecting toward but terminating short of each other. The locking teeth 33, 33 have lower surfaces 34, 34 engageable with the upper surfaces 22, 22 of the arms 12, 12 of the male member Al.

The tubular body 30 also has four supporting ridges 35 extending axially on the inner surface thereof, the ridges 35 being arranged in diametrically opposite pairs, as shown in Figure 5. The supporting ridges 35 serve to contact the side surfaces of the grip 11 and the arms 12, 12 of the male member Al as inserted in the through-hole 31 for thereby preventing the male member Al from wobbling with respect to the female member Bl.

The tubular body 30 has a downwardly tapered lower inner surface 36 on which there are disposed two diametrically opposite lands 37, 37 bulging radially inwardly toward each other. The lands 37, 37 are positioned in substantially radial alignment with the respective slots 32, 32. The lands 37, 37 have inner surfaces 38, 38 slanted progressively inwardly in the downward direction.

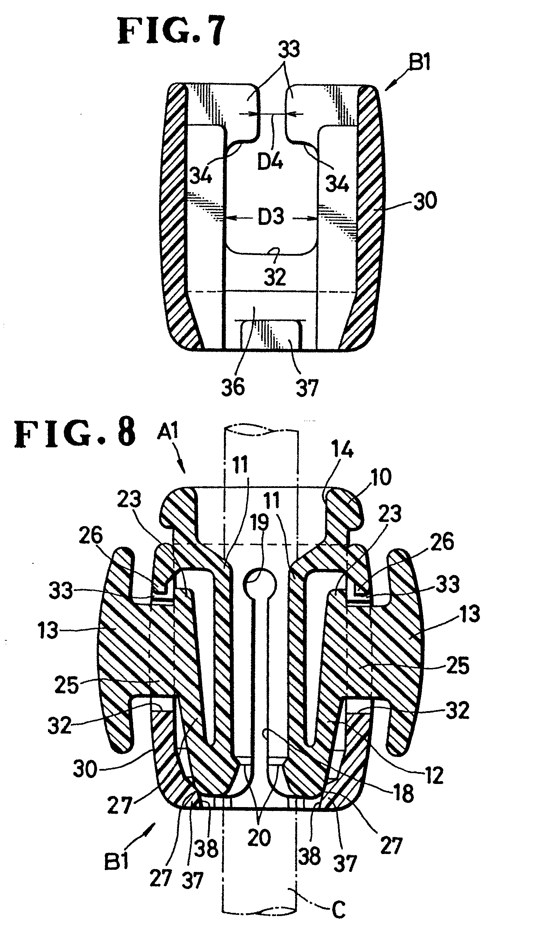

As shown in Figure 1, the uppermost ends of the outer slanted surfaces 24, 24 of the arms 12, 12 are spaced a distance Ll from each other, and the lowermost ends of the outer slanted surfaces 24, 24 are spaced a distance L2 from each other. As illustrated in Figure 2, each of the arms 12, 12 has a width L3, and each of the connectors 25, 25 and the locking projections has a width L4. As illustrated in Figure 6, the through-hole 30 has an inside diameter D1 at its upper end, and the lowermost ends of the lands 37, 37 are spaced a distance D2 from each other. As shown in Figure 7, each of the slots 32, 32 has a maximum width D3, and each of the narrowed upper open ends of the slots 32, 32 has a width D4. These dimensions are selected as follows: The distance L1 is slightly larger than the diameter D1. The distance L2 is larger than the width D2 and smaller than the diameter D1. The width L3 is slightly larger than the width D3. The width L4 is slightly smaller than the width D4.

In use, a cord or string C shown in Figure 8 is threaded through the cord insertion hole 14 in the male member A1, and then a portion of the cord C below the male member A1 is inserted downwardly through the through-hole 31 in the female member B1. Then, the grip 11 and the arms 12, 12 of the male member A1 are inserted downwardly into the through-hole 31 in the female member B1, thus coupling the male and female members A1, B1 together. In the course of inserting the male member A1 into the female member B1, the outer surfaces 24, 24 of the arms 12, 12 are brought into contact with the locking teeth 33, 33 since the

istance Ll is greater than the diameter Dl. As the male member Al is forced into the female member Bl, the arms 12, 12 are caused to be elastically deformed inwardly about their lower ends, and the connectors 25, 25 are moved between the locking teeth 33, 33, i.e., through the narrowed upper open ends of the slots 32, 32. When the upper surfaces 22, 22 of the arms 12, 12 are positioned below the locking teeth 33, 33, the outer surfaces 24, 24 of the arms 12, 12 are disengaged from the radially inward surfaces of the locking teeth 33, allowing the arms 12, 12 to spring back radially outwardly. Now, the male and female members Al, Bl are coupled together as shown in Figure 8. The male member Al cannot easily be released from the female member Bl since the upper surfaces 22, 22 of the arms 12, 12 engage the lower surfaces 34, 34 of the locking teeth 33.

With the male and female members Al, Bl combined as illustrated in Figure 8, the gripping ridges 20, 20 bite into the cord C. When the cord C is pulled downwardly in Figure 8, it displaces the grip 11 downwardly to cause the arcuate outer surfaces 27, 27 to engage the slanted surfaces 38, 38 of the lands 37, 37 of the female member Bl. The grip members 11a, 11b are elastically deformed radially inwardly by engagement with the slanted surfaces 38, 38. The gripping ridges 20, 20 are therefore moved toward each other into stronger biting engagement with the cord C, which is firmly fastened by the cord fastener against accidental removal therefrom.

If it is desired to adjust the degree to or the position in which the cord C is fastened while the male and female members A1, B1 are combined as shown Figure 8, then the pressers 13, 13 should be pressed inwardly. The arms 12, 12 are now elastically deformed radially inwardly. By slightly moving the male member A1 upwardly with respect to the female member B1, the arcuate outer surfaces 27, 27 are released from the slanted surfaces 38, 38. The gripping ridges 20, 20 are then displaced radially outwardly away from each other, and the cord C is loosened from the gripping ridges 20, 20. The cord C can now be adjusted to change its position with respect to the cord fastener or vary the degree to which the cord C is fastened by the cord fastener, without having to disassemble the cord fastener.

When the male member A1 is to be detached from the female member B1, the pressers 13, 13 are pushed radially inwardly to displace the arms 12, 12 radially inwardly until the upper surfaces 22, 22 are disengaged from the lower surfaces 34, 34 of the locking teeth 33, 33. The male member A1 can now be removed from the female member B1 with the connectors 25, 25 passing through the narrowed upper open ends of the slots 32, 32.

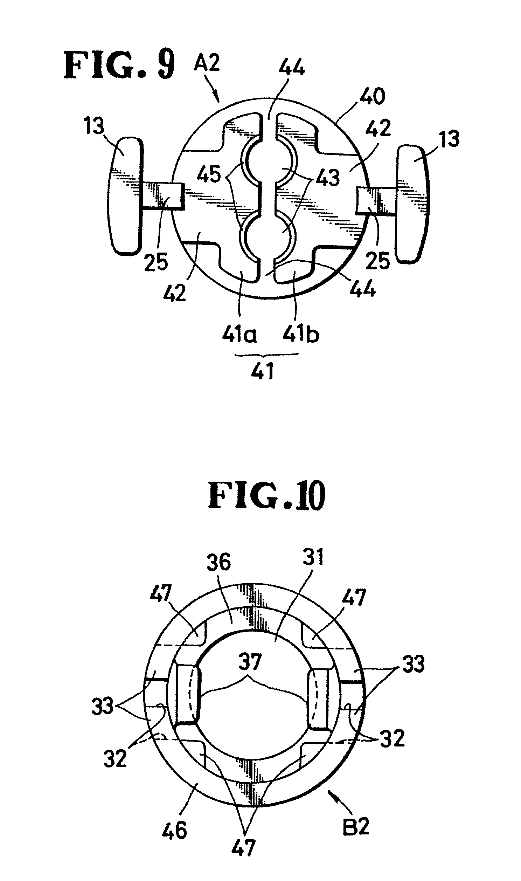

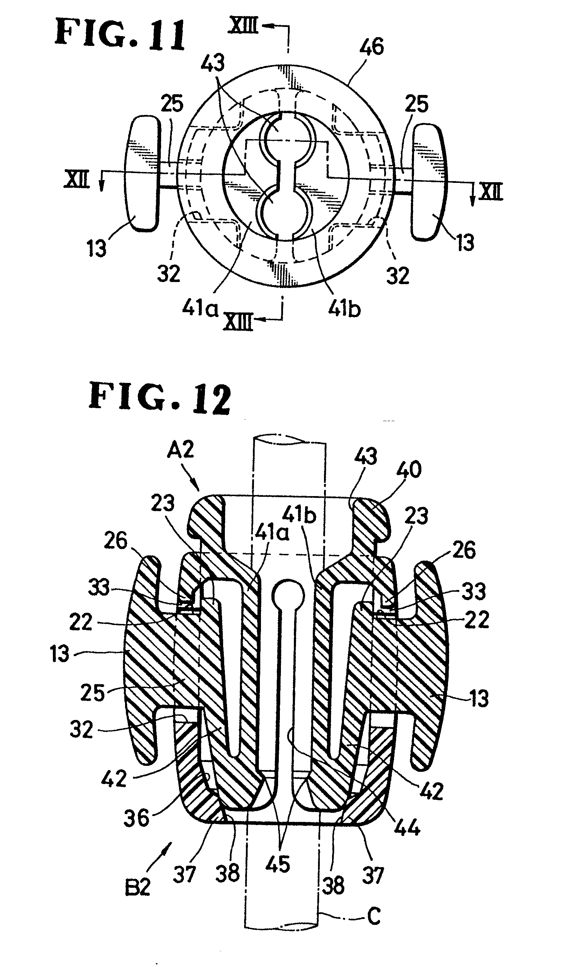

Figures 9 through 13 illustrate a cord fastener according to a second embodiment of the present invention. The cord fastener of the second embodiment has a male member A2 as shown in Figure 9 which has a base 40, a grip 41 extending downwardly therefrom, and a pair of arms 42, 42 extending obliquely upwardly from the lower end of the grip 41. The grip 41 is wider than the arms 42, 42 and has a pair of transversely spaced cord insertion holes 43, 43 and an expanding slot 44 defined thereacross through the cord insertion holes 43, 43. The grip members 41a, 41b have gripping ridges 45 projecting into each of the cord insertion holes 43. The grip 41 is divided into a pair of elastically deformable grip members 41a, 41b by the cord insertion holes 43, 43 and the expanding slot 44. Figure 10 shows a female member B2 comprising a hollow tubular body 46 having four supporting ridges 47 on the inner surface of the tubular body 46 for engaging the grip members 41a, 41b and the arms 42, 42. The other structural details of the male and female members A2, B2 are the same as those of the male and female members A1, B1 of the first embodiment.

The male and female members A2, B2 can be coupled to each other in the same manner as that in which the male and female members A1, B1 of the first embodiment are coupled together. According to the second embodiment, two cords C or the ends of a cord C can be inserted through the cord insertion holes 43, 43, respectively, and can adjustably be fastened the cord fastener in the same manner as described above with respect to the first embodiment.

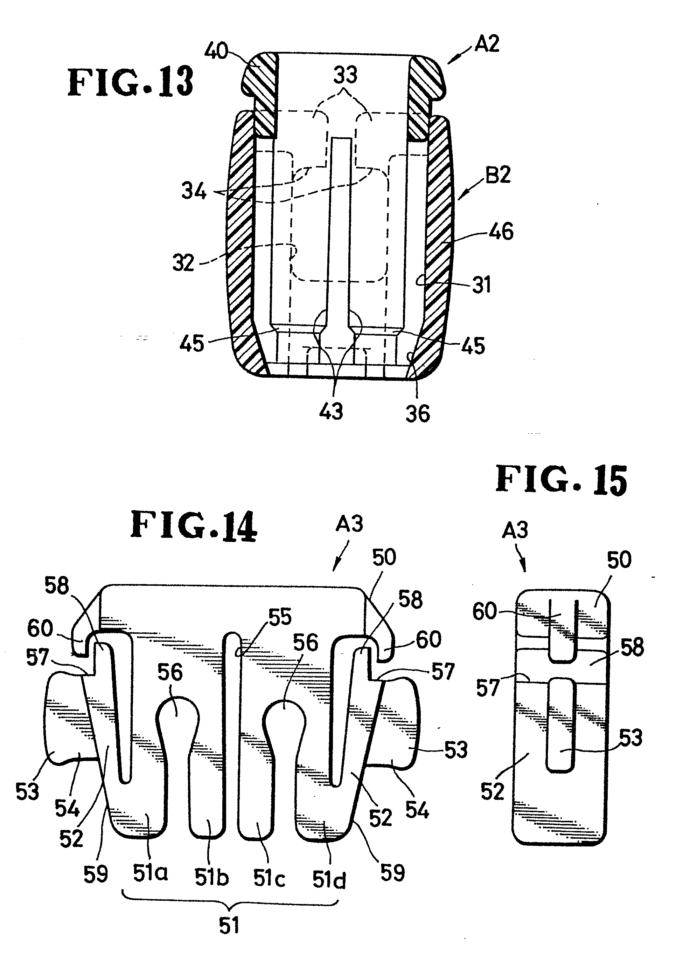

Figures 14 through 21 illustrate a cord fastener according to a third embodiment of the present invention. As shown in Figures 14 through 17, the cord fastener comprises a male member A3 comprises a base 50, a grip 51 extending downwardly therefrom, and a pair of arms 52, 52 extending obliquely upwardly from the lower end of the grip 51. A presser 53 is joined by a connector 54 to each of the arms 52, 52, the presser 53 and the connector 54 being of substantially the same thickness. The grip 51 has a central recess 55 extending from the lower end thereof up to the base 50. The grip 51 also has two expanding slots 56, 56 disposed one on each side of the central recess 55 and dividing the grip 51 into two pairs of grip members 51a, 51b.

Each of the arms 52, 52 has an upper surface 57 from which a locking pawl 58 projects upwardly, and a slanted outer surface 59. The base 50 includes a pair of locking projections 60, 60 for engagement with the locking pawls 58, 58, respectively. A pair of spaced-apart cord insertion holes 61, 61 is defined in the base 50 and the grips 51 in communication with the slots 56, 56, respectively.  A pair of gripping ridges 62, 62 of triangular cross section extends into each of the cord insertion holes 61, 61.

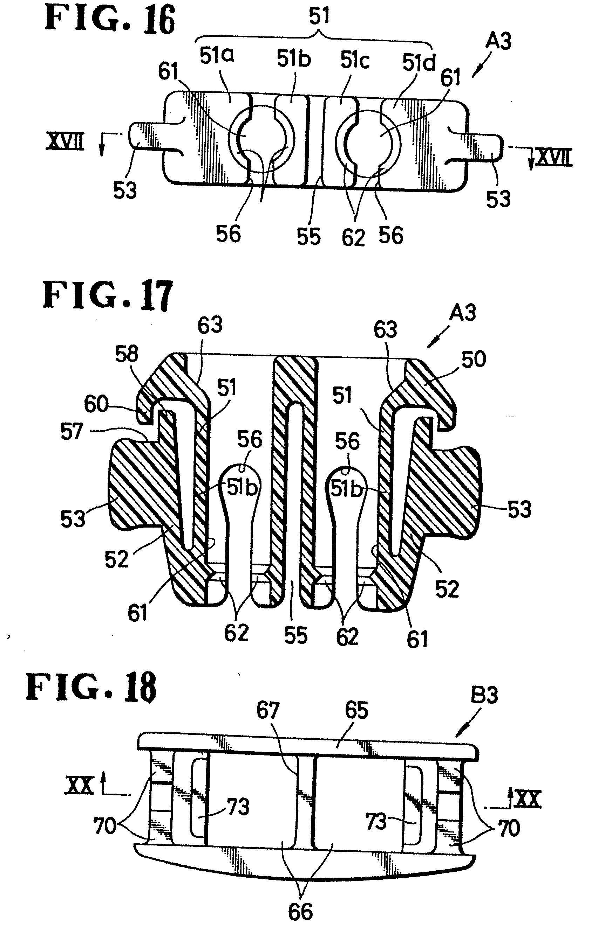

As shown in Figures 18 through 20, the cord fastener also comprises a female member B3 composed of a hollow body 65 having a pair of through-holes 66, 66 separated by a central vertical partition 67.  The female member B3 also has a pair of slots 68, 68 defined in opposite side walls 69, 69, respectively. Each of the slots 68, 68 has a narrowed upper open end defined between a pair of locking teeth 70, 70 having lower surfaces 71, 71 engageable respectively with the upper surface 57 of one of the arms 52, 52 of the male member A3.  The side walls 69, 69 have a pair of respective tapered surfaces 72, 72 including a pair of respective lands 73, 73 projecting into the holes 66, 66 and having slanted surfaces 74, 74, respectively, for enabling the gripping ridges 62, 62 to bite into two cords C or the ends of a cord C passing through the cord insertion holes 61, 61.

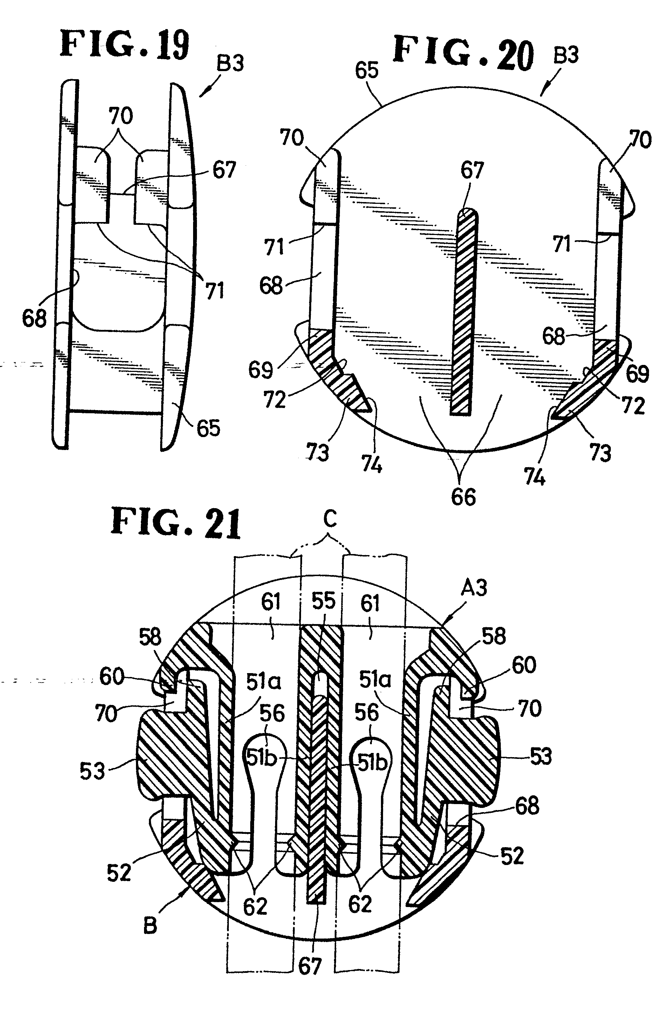

When the male member A3 is inserted in the female member B3 as illustrated in Figure 21, the central partition 67 of the female member B3 is fitted in the recess 55 in the male member A3 to prevent the latter from wobbling with respect to the female member B3.  The male and female members A3, B3 can be coupled and separated, and the two cords C or the ends of a

- 16 -

cord C can adjustably be fastened in the same manner as described above with respect to the previous embodiments.

CLAIMS:

1. A cord fastener comprising a male member (A1; A2; A3) composed of a base (10; 40; 50), a grip (11; 41; 51) extending integrally and downwardly from said base and having at least a pair of spaced grip members (11a, 11b; 41a, 41b; 51a, 51b), at least one cord insertion hole (14; 43; 61) extending through said base and said grip and at lease one first slot (18; 44; 56) extending longitudinally across said cord insertion hole; a female member (B1; B2; B3) composed of a hollow body (30; 46; 65) having at least one through-hole (31; 66), CHARACTERIZED IN THAT said male member (A1; A2; A3) comprises a pair of arms (12; 42; 52) extending obliquely upwardly from said grip members (11a, 11b; 41a, 41b; 51a, 51b), respectively, and disposed outwardly of said grip members in spaced relation thereto, said arms having upper surfaces (22; 57), and a pair of pressers (13, 13; 53, 53) extending outwardly of said arms (12; 42; 52), respectively, said grip members (11a, 11b; 41a, 41b; 51a, 51b) having gripping projections (20; 45; 62) extending into said cord insertion hole (14; 43; 61); AND IN THAT said hollow body (30; 46; 65) has a pair of diametrically opposite second slots (32, 32; 68; 68) opening upwardly and each having its upper open ends narrowed by a pair of overhanging locking teeth (33, 33; 70, 70) projecting toward each other, said locking teeth having lower

- 18 -

surfaces (34, 34; 71, 71) engageable with said upper surface of said arms (12, 42, 52), said hollow body (30; 46; 65) further having inner surfaces (38; 74) for engaging lower ends of said arms (12; 42; 52) to force said gripping projections (20; 45; 62) into biting engagement with the cord in said cord insertion hole (14; 43; 61).

2. A cord fastener according to claim 1, said inner surfaces (38; 74) being progressively slanted inwardly in a downward direction.

3. A cord fastener according to claim 1, said first slot (18) terminating in a larger recess (19) near said base to render said grip members more elastically deformable closely to said base.

4. A cord fastener according to claim 1, said arms (12; 42; 52) having locking pawls (23; 58) projecting upwardly from said upper surfaces, said base (10; 40; 50) having locking projections (26; 60) disposed outwardly of said locking pawls and extending downwardly beyond upper ends of said locking pawls, said locking projections having inner surfaces (28) confronting outer surfaces (29) of said locking pawls.

5. A cord fastener according to claim 1, said male member (A2; A3) having two spaced cord insertion holes (43; 43) extending through said base (40; 50) and said grip (41; 51).

6. A cord fastener according to claim 1, each of

- 19 -

said gripping projections comprising an arcuate ridge (20; 45; 62) of a circular cross section.

7. A cord fastener according to claim 1, said cord insertion hole (14) including a larger-diameter portion (15) in said base (10), a smaller-diameter portion (16) in said grip (11), said a tapered intermediate portion (17) between said larger- and smaller-diameter portions (15, 16).

8. A cord fastener according to claim 1, said hollow body (30; 46) comprising a tubular construction having a plurality of supporting ridges (35; 47) for engaging said grip members and said arms when said male member (A1; A2) is inserted in said female member (B1; B2).

9. A cord fastener according to claim 1, said grip (51) having a central recess (55), said hollow body (65) having two cord insertion holes (66, 66) divided by a central partition (67), said central partition (67) being fittable in said central recess when said male member (A3) is inserted in said female member (B3).

# FIG. 1

# FIG. 2

0173891

# FIG.3

# FIG.4

0173891

# FIG.5

# FIG.6

# FIG. 7

# FIG. 8

0173891

# FIG. 9

A2  44  40  42  13

13  45  43

25  42  25

41a  41b

41

# FIG.10

36  31

47  47

33  37  33

33  32

32  32

46  B2

47

# FIG. 11

# FIG. 12

0173891

7/9

**FIG.13**

40  33  A2
34  B2
32  46
31
45  45
43  36

**FIG.15**

A3
60  50
57  58
52  53

**FIG.14**

A3
58  50
60  55  58
57  56  56  60
53  57
52  53
54  52  54
53  59  59
52
59  51a  51b  51c  51d  59
51

# FIG. 16

# FIG. 17

# FIG. 18

FIG. 19

FIG. 20

FIG. 21

0173891

European Patent
Office

**EUROPEAN SEARCH REPORT**

0173891
Application number

EP 85 11 0129

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A- 163 340 (SKIPWITH) <br> * Whole document * | 1 | F 16 G 11/00 |
| A | CH-A- 208 803 (GRANDJEAN) <br> * Page 1, right-hand column, lines 7-20; figures 3,4 * | 1 | |
| A | CH-A- 192 772 (WEBER) <br> * Whole document * | 1,6 | |
| A | US-A-3 776 586 (AHLGREN) | | |
| A | US-A-3 965 544 (BODEN) | | |
| A,D | JP-U-51 038 406 | | |
| A,D | JP-U-49 023 670 | | |

TECHNICAL FIELDS
SEARCHED (Int. Cl.4)

F 16 G
A 44 B
A 43 C
B 65 D
H 01 B

The present search report has been drawn up for all claims

| Place of search <br> THE HAGUE | Date of completion of the search <br> 22-11-1985 | Examiner <br> BARON C. |
|---|---|---|